# EUROPEAN PATENT SPECIFICATION

(11) **EP 1 944 932 B1**
(45) Date of publication and mention of the grant of the patent: **29.04.2009**
(21) Application number: 07250064.8
(22) Date of filing: 09.01.2007
(51) Int. Cl.: H04L 12/66, H04L 12/28

(54) **System and method for controlling the devices connected to a control gateway**
System und Verfahren zur Steuerung von an eine Steuerungsschnittstelle angeschlossenen Geräten
Procédé et système de contrôle des dispositifs reliés à une passerelle de commande

(43) Date of publication of application: 16.07.2008
(73) Proprietor: Industrial Technology Research Institute, Chutung Hsinchu Taiwan 310 (CN)
(72) Inventor: Lee, Kuen-Ming, Chia-Tung Country, Ping-Tung Hsien (TW); Sheng, Yu-Shiang, Ta-Tung Dist. Taipei (TW)
(74) Representative: Gee, Steven William

(56) References cited:
- US-A1- 2005 021 484
- US-A1- 2005 071 463
- US-A1- 2006 036 847

## Description

### FIELD OF THE INVENTION

The present invention generally relates to a system and method for controlling the devices connected to the control gateway, applicable to an open platform and a communication system between the devices connected to a control gateway.

### BACKGROUND OF THE INVENTION

As the digital home and internet grow rapidly, the home network communication protocols, integration platforms, and middlewares are developed. As there exist no consensus on the digital home architecture and framework, there is neither a consensus on the standard protocol for the digital home. Therefore, the integration of different network communication protocols and networks becomes the most important issue in the digital home development. The open service platform proposed by the Open Services Gateway Initiative (OSGi) Alliance is one of the solutions.

In the most recent OSGi standard, only two connection types that can be converted to control are defined. The first is the Device Access standard, defining how to download a corresponding driver for a physical device connecting to an open service gateway (OSG). The second is through the network connection to convert to the universal plug and play (UPnP) standard. Through the conversion to the UPnP device service, the service can be provided to the internal bundles or the control devices of external UPnP control point.

In general, in most digital home applications, the devices are not all connected to an open service gateway. Not all the devices have powerful network communication capability. The common connection for most devices is connected through a simple device with simple functions to a more powerful control gateway for external communication. The control gateway acts as a window to indirectly control the simple devices connected to the control gateway. For example, the home security layout is through a plurality of simple sensors, connected to a more powerful control host for overall control.

Another example is the LonWorks network layout for smart home, including several LonWorks standard devices, connected to a LonWorks server. Through the LonWorks server, the goal of indirect control of LonWorks standard devices is achieved. In this architecture, it is usually impossible to directly communicate with the devices connected to the control gateway, and the communication must be accomplished through the control gateway. The present OSGi standard does not specify the connection method for controlling the connected devices through the control gateway.

The current OSGi standard defines only two solutions for network communication protocols, namely, UPnP and Jini, including how to convert the UPnP or Jini protocols to the OSGi standard, or how to convert the OSGi standard to the UPnP and Jini protocols. However, there is no mention of how to integrate or control the devices and the device services connected to the control gateway.

The aforementioned many architectures for devices connected to the control gateway can only treat the control gateway and the connected devices as a virtual device bundle if using OSGi defined Device Access standard, and then download the driver based on the virtual device bundle. The driver for the virtual device bundle is the collection of all the individual drivers for the control gateway and the connected devices. With this type of implementation, once a device is removed from the control gateway or a new device is added to the control gateway, the bundle driver is no longer applicable, and the new bundle driver needs to be downloaded.

This type of implementation is neither practical nor effective since an entire bundle driver needs to be downloaded even if only one device is removed or added. The process is tedious, time-consuming and ineffective.

The UPnP Device Service defined in the present OSGi standard only provides an interface for converting the non-UPnP devices to UPnP device service so that internal bundles or external UPnP control points can use or control. In addition, the OSGi also provides an UPnP base driver mechanism to the UPnP devices to automatically register the UPnP device service to the service registry of the open service gateway.

Because the open service platform cannot communicate directly with the devices connected to the control gateway, the above connection architecture cannot provide the devices connected to the gateway with the function of conversion to different device service and corresponding device services downloading.

Many current research papers focus on how to integrate non-OSGi network communication protocols or middlewares to the open service platform. For example, Ditze, M. et. al, presented a paper "Service-Based Access to Distributed Embedded device through the Open Service Gateway,", IEEE Industrial Informatics, pp.493-498, June 2004. The prior art disclosed how to package the home audio-video interoperability (HAVi) and the devices on the control area network (CAN) as a control service through OSGi Device Access standard and JAVA native interface (JNI), and register to the service registry of the open service home gateway to achieve the goals of integration and control.

Another paper, presented by Dobrev, P., et. al., "Device and Service Discovery in Home Network with OSGi,", IEEE Communication Magazine, pp. 86-92, August 2002, disclosed the conversion standards between Jini and OSGi, and between UPnP and OSGi. This technique can only convert the Jini and UPnP device services, and the devices must have the capability of device discovery and the capability to be controlled.

The above two papers does not propose a solution for integrating the devices connected to the control gateway into the open service platform. Other patent documents mostly use the generation of a corresponding control mechanism on the open service platform to achieve the control of the devices being controlled by the standard middlewares or network protocols.

U.S. Patent Publication No. 2004/0267950 disclosed a method and an apparatus for using a device control module to control HAVi standard devices. This technique generates the device control module on the open service platform to match the device control module in the HAVi standard structure so as to control the HAVi standard devices.

U.S. Patent Publication 2001/034,754 disclosed a markup-language-type syntax to control the different network communication protocols used in home. Similarly, this document does not propose a solution to integrate the devices connected to the control gateway into the open service platform.

Taiwan Patent Application No. 94145773 disclosed a method for processing the conversion of the devices connected to the control gateway, and how to integrate into the open service platform to achieve the goals of integration and control. This system architecture must place the control gateway base driver on the open platform during the construction phase. The same applies for the disclosure of US-A1-2006/0036847.

However, in actual applications, there may be many types of control gateways; therefore, it is impossible to build all the control gateway base drivers in the system when the open service gateways are manufactured. Furthermore, the control gateways must obtain their device service from the remote server or component download center through the network. The process is time-consuming and prone to connection interruption.

### SUMMARY OF THE INVENTION

Examples of the present invention may provide a system and method for controlling the devices connected to a control gateway on an open platform. The system uses a device identifier and a device type identifier to automatically download the control gateway base driver, and use a mechanism of automatic generation and conversion of device protocols by the control gateway base driver to provide the conversion of the devices protocols connected to the control gateway to other device protocol forms and automatically generate and register to the open platform.

The system includes one or more devices, a control gateway, a server and an open platform. Each of the one or more devices has a device identifier, and operates in a device protocol. The control gateway is electrically coupled to the one or more devices, and has a device type identifier. The server may provide a plurality of control gateway base drivers. The open platform is electrically coupled to the control gateway, and automatically downloads a corresponding control gateway base driver from the server according to the device type identifier. The open platform may also have a mechanism with the capability of automatic conversion and generation of another device protocol that corresponds to the device according to the device identifier and can communicate with the control gateway for controlling the one or more devices.

The open platform may include a control gateway wire administration module, a protocol proxy, and an instruction management module.

The control gateway wire administration module may detect the existence of the control gateway, communicate with the control gateway, and download the corresponding control gateway base driver. The protocol proxy may convert the device protocol of the original instruction for controlling the device. The instruction management module may convert the converted device protocol into the instruction or information understandable to the control gateway, and transmit to the control gateway following the control gateway's communication protocol in order to control the device.

Because the control gateway base driver cannot communicate directly with the devices connected to the control gateway, it is necessary to collect all the device identifiers through the control gateway. Therefore, the control gateway base driver must have the capability of device discovery to find the corresponding control gateway. The control gateway base driver can inquire of the control gateway the number of devices connected to the control gateway, the device identifier of each device, and device protocol description, and related information. Then, the control gateway base driver may generate the corresponding second form of device protocol on the open platform, register to the protocol registry, and generate corresponding device protocol objects.

At this point, the internal bundles on the open platform or the external control devices using other forms of device protocol can use or control these devices connected to the control gateway. This may provide convenience to the users of actual digital home applications, and better enable the digital life concept.

The foregoing and other objects, features, aspects and advantages of the present invention will become better understood from a careful reading of a detailed description provided herein below with appropriate reference to the accompanying drawings.

### BRIEF DESCRIPTION OF THE DRAWINGS

FIG. 1 shows a schematic view of the first embodiment of the present invention.

FIG. 2 shows a flowchart describing when the internal bundles on the open platform or other external control devices using the other form of device service use or control devices connected to a control gateway according to the present invention.

FIG. 3 shows a schematic view of the open platform shown in FIG. 1.

FIG. 4 shows a working example of the present invention.

FIG. 5 shows an example of the information required for converting Lon Works light device to UPnP device service.

FIG. 6 shows a flowchart illustrating the operation of the conversion of the format of SOAP signal into the standard form of UPnP device service.

FIG. 7A shows a flowchart illustrating the operation of an UPnP control point on an external wireless network controlling LonWorks light devices of the working example of FIG. 4.

FIG. 7B describes the flowchart of FIG. 7A.

### DETAILED DESCRIPTION OF THE PREFERRED EMBODIMENTS

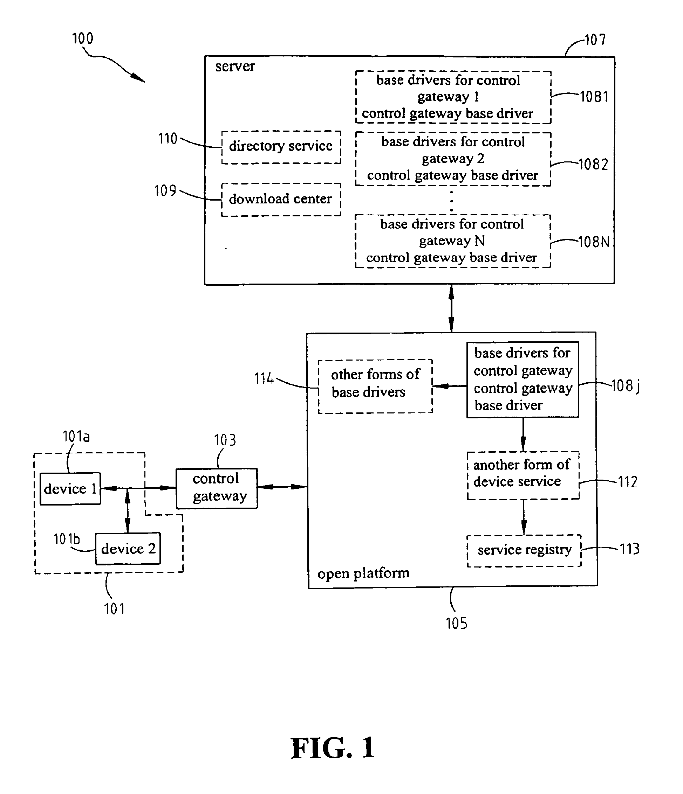

FIG. 1 shows a schematic view of the first embodiment of a system 100 for controlling the devices connected to a control gateway according to the present invention. As shown in FIG. 1, system 100 includes one or more devices 101 (such as 101a, 101b), a control gateway 103, an open platform 105, and a server 107.

Each of the one or more devices has a device identifier, and operates in a device protocol. Control gateway 103 is electrically coupled to devices 101a, 101b, and has a device type identifier. Server 107 provides a plurality of control gateway base drivers 1081-108N to control gateways 1-N. The open platform 105 is electrically coupled to control gateway 103, and automatically downloads corresponding control gateway base driver 108j from server 107 according to the device type identifier. The open platform 105 also has a mechanism with the capability of automatic conversion and generation of another device protocol that corresponds to devices 101a, 101b and can communicate with control gateway 103 for controlling devices 101a, 101b.

The device identifier may include the unit identification of the device, device description and a device protocol description. The device protocol description information is distinguished by groups, for example, according to the device functionality, or required parameters, so that the device protocol description information for the device is unique.

Control gateway base drivers 1081-108N can be provided by the manufacturer according to the device type identifier. Server 107, in addition to providing control gateway base drivers 1081-108N, usually has a download center 109 and a directory service 110, as shown in FIG. 1.

The open platform 105 is for analyzing the device type identifier of control gateway 103, using the device type identifier to inquire directory service 110 of remote server 107, downloading control gateway base driver 108j corresponding to control gateway 103 from download center 109 to the open platform 105, and activating control gateway base driver 108j.

When control gateway base driver 108j is downloaded to the open platform 105 and receives the device identifier from control gateway 103, control gateway base driver 108j then searches for device protocols of base drivers 114 of other forms existing on the open platform 105 to automatically generate corresponding device protocol 112 in the other device protocol and register to service registry 113 on the open platform 105. At this point, the internal bundles on the open platform 105 or other external control devices using other forms of device protocol can use or control the device protocol, and transmit the converted instruction to control gateway 103. Then, control gateway 103 controls the connected one or more devices according to the converted instructions.

Based on this, system 100 of the present invention solves the problem that the open platform 105 cannot connect and directly communicate with devices 101 connected to control gateway 103.

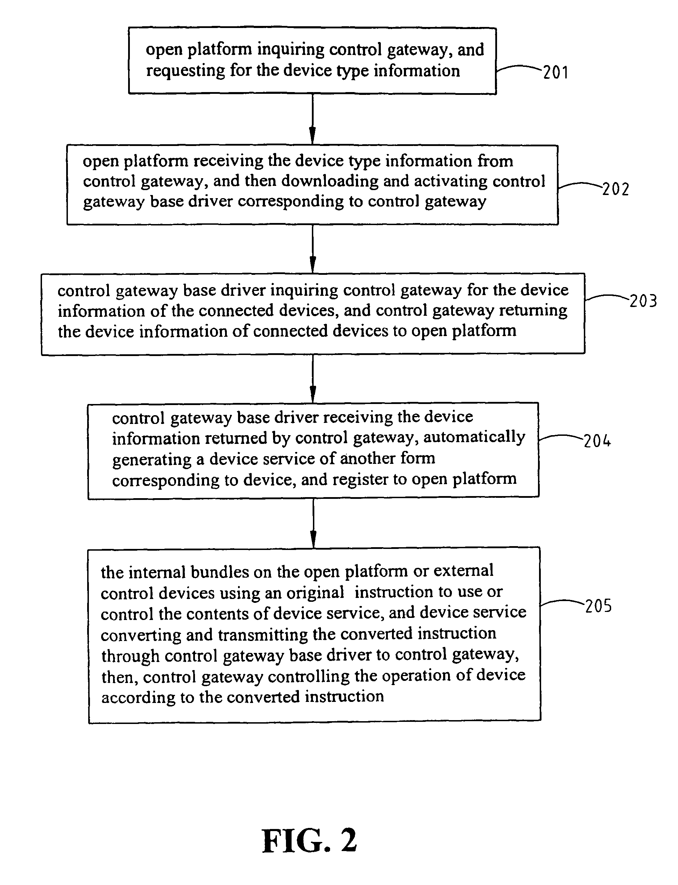

When control gateway 103 of system 100 of the present invention connects to the open platform 105, the internal bundles on the open platform 105 or other external control devices using other forms of device protocol can use or control devices 101 connected to control gateway 103, shown as steps 201-205 of FIG. 2.

Step 201 is for the open platform 105 to inquire control gateway 103, and request the device type identifier.

Step 202 is for the open platform 105 to receive the device type identifier from control gateway 103, and then download and activate control gateway base driver 108j corresponding to control gateway 103.

The open platform 105 analyzes the information returned from control gateway 103, and extracts the corresponding device type identifier. The device type identifier is used in the inquiry to directory service 110 of server 107. Server 107 responds to the inquiry from the open platform 105. If inquired control gateway base driver 108j exists and can be downloaded, directory service 110 of server 107 returns the downloadable component or download location, and automatically downloads and activates control gateway base driver 108j from download center 109 to the open platform 105.

If inquired control gateway base driver 108j does not exist, directory service 110 responds to the open platform 105 that the inquiry cannot be found.

Step 203 is for control gateway base driver 108j to inquire control gateway 103 for the device identifier of the connected devices 101, and for control gateway 103 to return the device identifiers of connected devices 101 to the open platform 105.

Because control gateway base driver 108j cannot communicate directly with devices 101 connected to control gateway 103, it is necessary to collect the device identifiers through control gateway 103. Control gateway base driver 108j must have the capability of device discovery to find corresponding control gateway 103.

Control gateway 103, after receiving the inquiry from control gateway base driver 108j, starts to collect the device identifiers from the connected devices 101, including device identification, device description, and device service description, and related information. The collected device identifiers are returned to control gateway base driver 108j.

Step 204 is for control gateway base driver 108j to receive the device identifiers returned by control gateway 103, automatically generate a device protocol 112 of another form corresponding to device 101a or 101b, and register to the open platform 105.

In step 204, if the device protocol corresponding to the device exists on the open platform 105, there is no need to generate such a device protocol.

Control gateway base driver 108j analyzes the received device identifier returned, extracts device identification, device description, and device service description, uses the extracted information to search the device protocols of other forms existing on the open platform 105, automatically generates a device protocol 112 of another form corresponding to the device 101a or 101b, registers device protocol 112 to service registry 113, and generates the corresponding device protocol object.

Step 205 is for the internal bundles on the open platform 105 or external control devices to use an original instruction to use or control the contents of device protocol 112, and for device protocol 112 to convert and transmit the converted instruction through control gateway base driver 108j to control gateway 103. The converted instruction can communicate with control gateway 103. Then, control gateway 103 controls the operation of devices 101 according to the converted instruction.

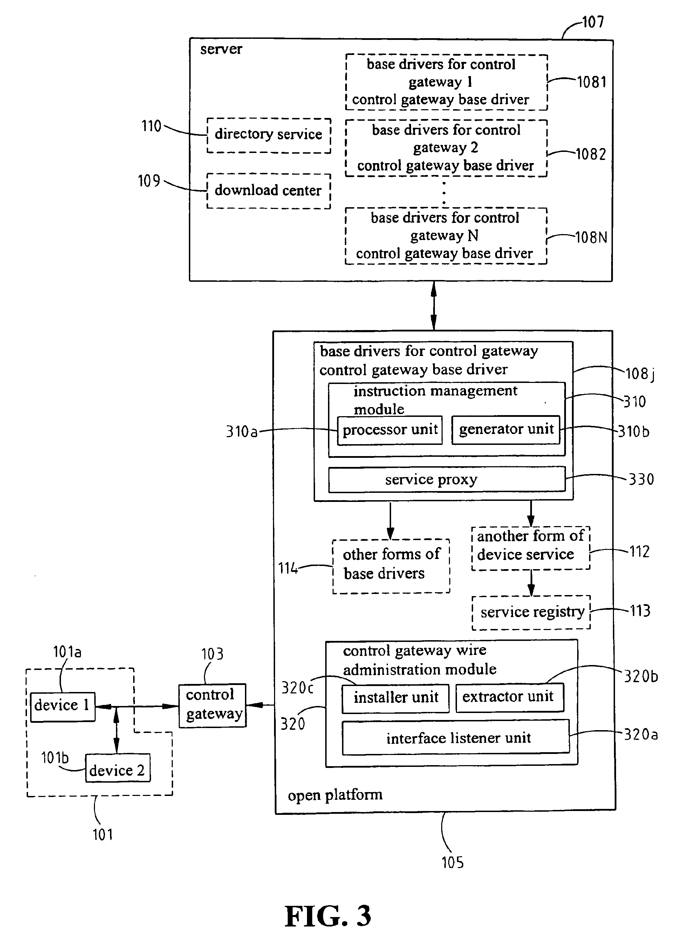

FIG. 3 shows a schematic view of the open platform. As shown in FIG. 3, the open platform 105 includes a control gateway wire administration module 320, a protocol proxy 330, and an instruction management module 310.

Control gateway wire administration module 320 downloads and activates control gateway base driver 108j from server 107. Control gateway wire administration module 320 further includes an interface listener unit 320a, an extractor unit 320b and an installer unit 320c, as shown in FIG. 3.

Interface listener unit 320a is for listening to all the interfaces on the open platform 105 to detect whether a control gateway 103 is connected to the open platform 105. Extractor unit 320b is for communicating with control gateway 103, and extracts the device type identifier of control gateway 103. Installer unit 320c is responsible for requesting, according to the device type identifier provided by extractor unit 320b, to server 107 for downloading and is also responsible for downloading and activating corresponding control gateway base driver 108j to the open platform 105.

As shown in FIG. 3, control gateway base driver 108j is mainly realized by instruction management module 310 and protocol proxy 330. When the internal bundles on the open platform 105 or the external control devices of other device protocol use an original instruction to control device protocol 112, control gateway base driver 108j converts the original instruction to device protocol 112 of the other device protocol form, and then converts to the form that can communicate with control gateway 103. Therefore, the internal bundles on the open platform 105 or the external control devices of other device protocol form can control devices 101 connected to control gateway 103.

Instruction management module 310 generates device protocol 112 of other form corresponding to device 101a or 101b on the open platform 105, registers the device protocol to the open platform 105, converts to an instruction that can communicate with control gateway 103, and uses a communication protocol to transmit to control gateway 103 for controlling connected devices 101. Instruction management unit 310 includes a processor unit 310a, and a generator unit 310b for performing the tasks.

Processor unit 310a receives and converts the signals transmitted by control gateway 103 to indirectly achieve device discovery. Processor unit 310a also receives instruction from protocol proxy 330, converts into an instruction acceptable to control gateway 103, and transmits the instruction to control gateway 103 in a communication protocol suitable for control gateway 103 to control connected devices 101.

Generator unit 310b searches for other forms of device protocols existing on the open platform 105. Then, generator unit 310b, using the other forms of device protocol, generate protocol proxy 330 of other device protocol form. Then, generator unit 310b registers proxy protocol 330 to service registry 113 of the open platform 105.

Protocol proxy 330 includes a device-protocol-form-dependent device protocol content, and is responsible for the conversion between different device protocol forms. Through each protocol proxy, a corresponding device protocol 112 can be obtained so that devices 101 connected to control gateway 103 can be controlled.

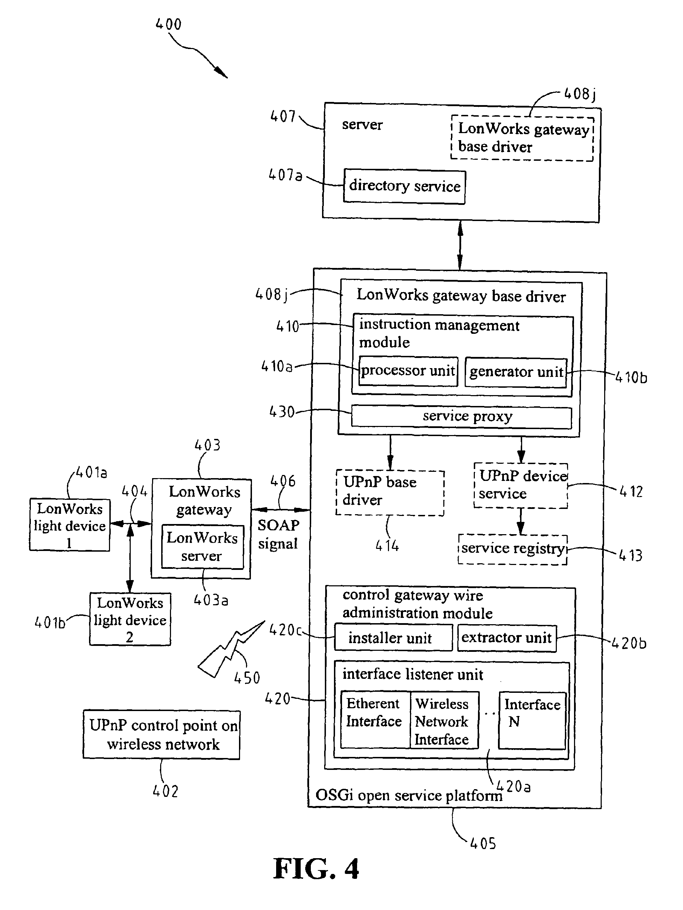

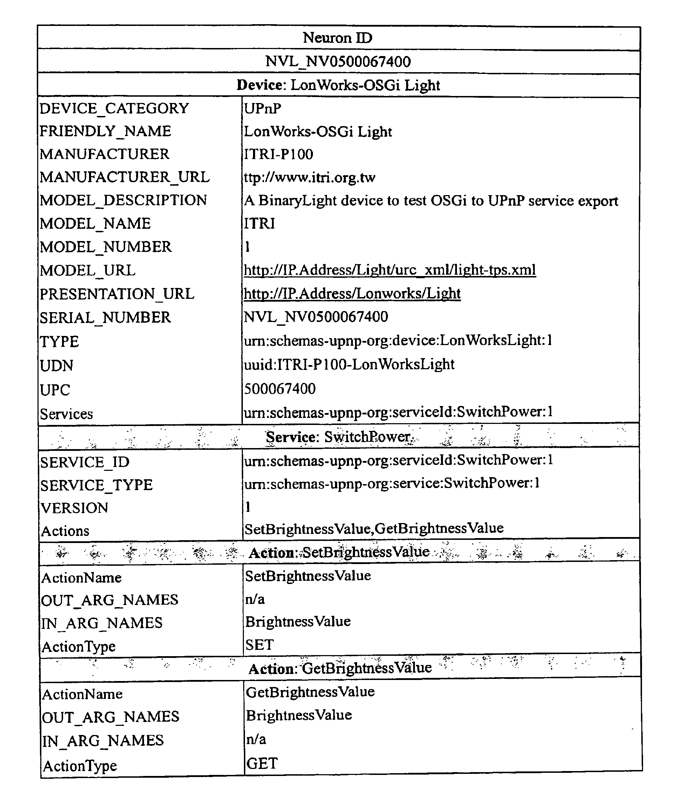

FIG. 4 shows a working example of the present invention, including the use of a control device of an UPnP control point 402 in an external wireless network 450 to control standard Lon Works devices, for example, LonWorks light devices 401a-401b connected to LonWorks gateway 403. LonWorks standard devices use power line 404 to connect Lon Works gateway 403.

As shown in FIG. 4, system 400 of the example includes a LonWorks gateway 403, a plurality of LonWorks light devices 401a-401b, connected to LonWorks gateway 403 through power line 404, an OSGi open service platform 405, communicated with LonWorks gateway 403 through simple object access protocol (SOAP) signal 406, and a control device of an UPnP control point 402 in an external wireless network 450, connected to the OSGi open service platform 405 through wireless network 450.

The OSGi open service platform 405 includes a control gateway wire administration module 420, and an UPnP base driver 414. Control gateway wire administration module 420 is for communicating with LonWorks gateway 403, and downloading base driver 408j corresponding to LonWorks gateway from server 407 for the OSGi open service platform 405.

Interface listener unit 420a of control gateway wire administration module 420 which detects LonWorks gateway 403 is connected to the open service platform 405 through a network interface. Extractor unit 420b is for communicating with LonWorks gateway 403. Because at present LonWorks server 403a of LonWorks gateway 403 uses SOAP signal 406 for external communication, extractor unit 420b receives, transmits and analyzes SOAP signal 406, and extracts the device type identifier of LonWorks gateway 403.

Finally, installer unit 420c is responsible for requesting, according to the extracted device type identifier of LonWorks gateway 403, to remote server 407 for downloading and is also responsible for downloading and activating corresponding LonWorks gateway base driver 408j to the OSGi open service platform 405.

LonWorks gateway base driver 408j converts SOAP signal 406 of LonWorks server 403a to UPnP device service 412 standard.

LonWorks gateway base driver 408j is mainly realized by instruction management module 410 and protocol proxy 430. Instruction management module 410 is mainly for communicating with LonWorks server 403a, receiving and transmitting SOAP control signal and information, and extracting the useful information. In addition, instruction management module 410 is for converting the instruction from UPnP control point 402 of wireless network 450 into the format of SOAP signal 406 to transmit to LonWorks server 403a to achieve the control of LonWorks light devices 401a-401b.

In this embodiment, processor unit 410a of instruction management module 410 provides two main functions. The first is to receive and convert SOAP signal 406, and transmit to LonWorks server 403a. The second is to receive instructions from protocol proxy 430, convert the received instructions to the format of SOAP signal 406, and transmit to LonWorks server 403a to control LonWorks light devices 401a, 401b.

For example, processing unit 410a performs the analysis and packaging of SOAP signal. First, processing unit 410a collects SOAP signals 406 issued by LonWorks server 403a, analyzes and extracts useful information, and transmits the information to protocol proxy 430 and generator unit 410b. In addition, processor unit 410a is also responsible for packaging the instruction issued by UPnP control point 402 of external wireless network 450 into the format of SOAP signal 406. Then, processor unit 410a transmits SOAP signal 406 to LonWorks server 403a to control LonWorks light devices 401a, 401b.

Generator unit 410b generates protocol proxy 430 for converting between LonWorks standard device protocol and UPnP device protocol, and registers proxy protocol 430 to service registry 413 of the open service platform 405. Through protocol proxy 430, a corresponding UPnP device protocol 412 can be obtained for LonWorks light devices 401a, 401b to achieve the control of LonWorks light devices.

The LonWorks gateway manufacturer must provide a unit identification for the device type to server 407 for finding and downloading corresponding control gateway base driver 408j. With the use of service directory 407a of server 407, system 400 is more flexible and easy for management.

SOAP signal 406 issued by LonWorks server 403a includes only information on the control and state variables of network variable input (NVI) and network variable output (NVO). On the other hand, the content of standard form of UPnP device protocol usually includes UPnP service description and UPnP device description. Therefore, the actual SOAP signal 406 issued by Lon Works server 403a is insufficient for system 400 to convert into corresponding UPnP device protocol 412 standard form. As a result, when LonWorks server 403a uses SOAP signal 406 to communicate with the OSGi open service platform 405, LonWorks server 403a must provide LonWorks device type identifier, and LonWorks device type identifier to be embedded in SOAP signal 406 for control gateway wire administration module 420 to analyze and request the downloading of LonWorks gateway base driver 408j from server 407.

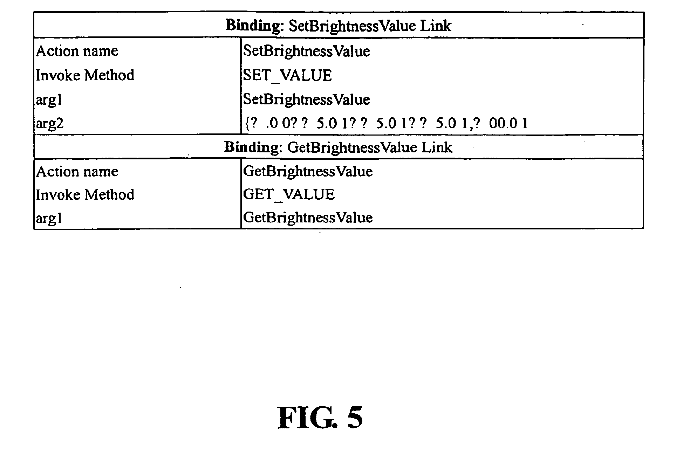

The Neuron chip of each LonWorks standard device includes a neuron id. The neuron id is a globally unique number representing the serial information of the LonWorks device. Using the uniqueness of the id, the neuron id is embedded in the nvl name, and the UPnP protocol description, UPnP device description, and link information is also embedded when the LonMaker tool is used to construct the LonWorks network in the beginning. FIG. 5 shows an example of the information that is required for converting LonWorks light devices 401a-401b to UPnP protocol device 412.

As shown in FIG. 5, SOAP signal 406 issued by LonWorks server 403a includes the LonWorks light device identifier of FIG. 5, including neuron id, device description, and device protocol description. The information is used for generating a protocol proxy of different device protocol form.

The manufacturers must follow the standard interface of UPnP Device Protocol defined in Chapter 111 of OSGi Service Platform Release 4 to provide the UPnP device protocol information, i.e., UPnP protocol description, UPnP device description, and link information, and so on.

The standard form of UPnP device protocol 412 of system 400 is the UPnP Device Protocol standard defined by the OSGi Alliance. With a standard interface to convert a non-UPnP device into a standard UPnP device of the open service platform. In other words, the present invention does not need to define a new standard, which increases the acceptance of the present invention. The explanation of the standard interface of UPnP device protocol 412 is omitted here.

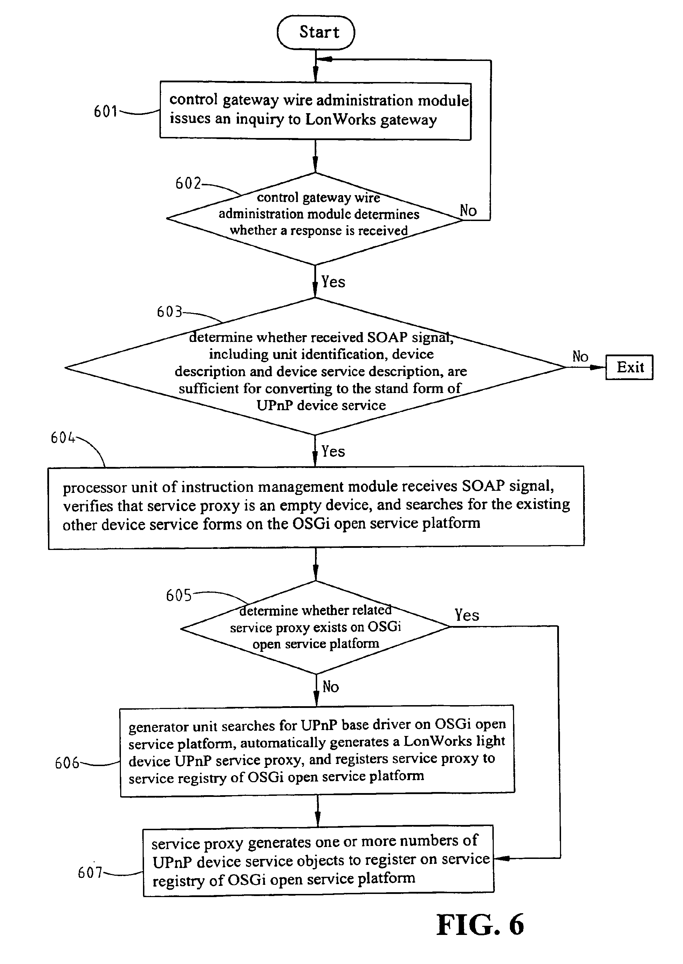

In the above working examples, the control device of UPnP control point 402 of wireless network 405 controls LonWorks light devices 401a, 401b by converting SOAP signal 406 into the standard form of UPnP device protocol 412. FIG. 6 shows the flowchart of the operation of the conversion of SOAP signal 406 into the standard form of UPnP device protocol 412.

Initially, protocol proxy 430 of LonWorks gateway base driver 408j on the OSGi open service platform 405 is an empty device and does not provide the UPnP device protocol 412. When LonWorks gateway 403 connects to the OSGi open service platform 405, LonWorks gateway base driver 408j can communicate with LonWorks gateway 403 after obtaining the IP address of LonWorks gateway 403 and the Web Service Description Language (WSDL) information.

Then, control gateway wire administration module 420 issues an inquiry to LonWorks gateway 403, as shown in step 601. Step 602 is for control gateway wire administration module 420 to determine whether a response is received. If not, step 601 is repeated; otherwise, step 603 is to determine whether received SOAP signal 406, including neuron id, device description and device protocol description are sufficient for converting to the standard form of UPnP device protocol 412. If not sufficient, the signal is considered as an exception, and exits.

If SOAP signal 406 provides sufficient information to convert to the standard form of UPnP device protocol 412, processor unit 410a of instruction management module 410 receives SOAP signal 406, verifies that protocol proxy 430 is an empty device, and searches for the existing other device protocol forms on the OSGi open service platform 405, as shown in step 604. Step 605 is to determine whether related protocol proxy exists on the OSGi open service platform 405.

If the related protocol proxy does not exist, generator unit 410b searches for UPnP base driver 414 on the OSGi open service platform 405, automatically generates a LonWorks light device UPnP protocol proxy 430, and registers protocol proxy 430 to service registry 413 of the OSGi open service platform 405, as shown in step 606.

When generator unit 410b generates the protocol proxy in step 606, generator unit 410b, in addition to the generation of the protocol proxy following the standard interface of the UPnP device service, must concern about the interface conformity between protocol proxy 430 and instruction management module 410 in LonWorks gateway base driver 408j to ensure the correct communication between the two. For example, a common Get nvl and Set nvl interface must be defined. That is, an interlink information must be provided.

After generator unit 410b generates protocol proxy 430 for the conversion of LonWorks standard device protocol and UPnP device protocol, LonWorks gateway base driver 408j includes the complete function, and protocol proxy 430 generates one or more numbers of UPnP device protocol 412 objects to register on service registry 413 of the OSGi open service platform 405, as shown in step 607. Hence, LonWorks light devices 401a, 40 1 b can be converted indirectly into UPnP standard devices. That is, UPnP control point 402 on an external wireless network 450 can discover LonWorks light devices 401a, 401b through the UPnP standard device discovery mechanism, and controls LonWorks light devices 401a-401b.

In step 605, if protocol proxy 430 exists on the OSGi open service platform 405, step 607 can be executed directly. Hence, LonWorks gateway base driver 408j includes the complete function for converting between SOAP signal 406 and UPnP standard form.

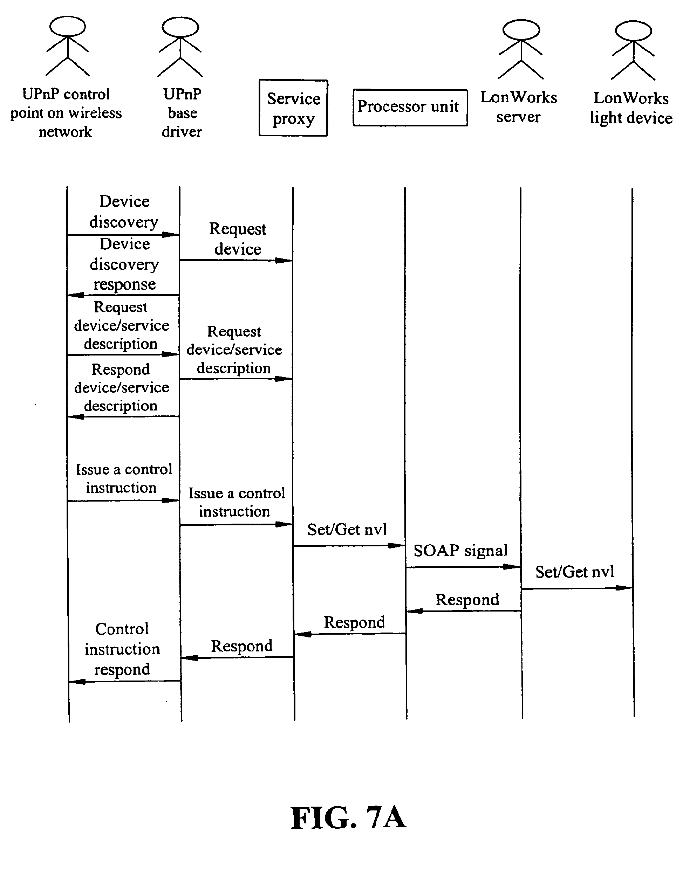

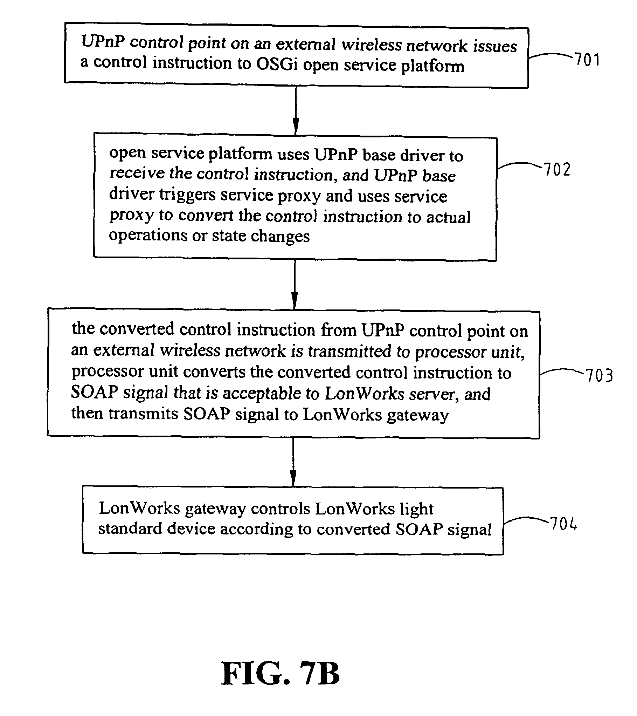

FIG. 7A shows a flowchart illustrating the operation of an UPnP control point on an external wireless network 450 controlling LonWorks light devices 401a-401b of the example of FIG. 4. FIG. 7B describes the flowchart of FIG. 7A.

Referring to FIGs. 7A and 7B, step 701 is for UPnP control point 402 on an external wireless network 450 to issue a control instruction to the OSGi open service platform 405. The open service platform 405 uses UPnP base driver 414 to receive the control instruction, and UPnP base driver 414 triggers protocol proxy 430 and uses protocol proxy 430 to convert the control instruction to actual operations or state changes, as shown in step 702.

Then, the converted control instruction from UPnP control point 402 on an external wireless network 450 is transmitted to processor unit 410a. Processor unit 410a converts the converted control instruction to SOAP signal 406 that is acceptable to LonWorks server 403a, and then transmits SOAP signal 406 to LonWorks gateway 403, as shown in step 703. Finally, LonWorks gateway 403 controls LonWorks light devices 401a-401b standard device according to converted SOAP signal 406, as shown in step 704.

Although the present invention has been described with reference to the preferred embodiments, it will be understood that the invention is not limited to the details described thereof. Various substitutions and modifications have been suggested in the foregoing description, and others will occur to those of ordinary skill in the art. Therefore, all such substitutions and modifications are intended to be embraced within the scope of the invention as defined in the appended claims.

## Claims

1. A system (100; 400) for controlling devices (104; 401) connected to a control gateway (103; 403), said system comprising:
one or more devices (101; 410), each said device having a device identifier and each device operating in a first device protocol;
a control gateway (103; 403), electrically coupled to said one or more devices, and having a corresponding device type identifier; **characterized in that** the system further comprises
a server (107; 407) for providing a plurality of control gateway base drivers (108; 408); and
an open platform (105; 405), electrically coupled to said control gateway, for automatically downloading a corresponding control gateway base driver (108; 408) from said server according to said device type identifier, also having a mechanism with the capability of automatic conversion and generation of second device protocol corresponding to said devices according to said device identifier, and said device protocol able to communicate with said control gateway for controlling said devices.

2. The system as claimed in claim 1, wherein said open platform further includes:
a control gateway wire administration module (420), for detecting the presence of said control gateway (403), downloading corresponding control gateway base driver (408), and activating said control gateway base driver;
a protocol proxy (430), having a form-dependent device protocol content, responsible for converting to said another device protocol and
an instruction management module (410), for generating device protocol content corresponding to said devices on said open platform, registering said device protocol content on said open platform, and converting to an instruction able to communicate with said control gateway, and using a communication protocol to transmit to said control gateway for controlling said devices (401).

3. The system as claimed in claim 1, wherein said device identifier further includes a unit identification of each said device, a device description, and a device protocol description.

4. The system as claimed in claim 2, wherein said control gateway wire administration module (420) further includes:
an interface listener unit (420a), for listening to all the interfaces on said open platform to detect whether a control gateway is connected to said open platform;
an extractor unit (420b), for communicating with said control gateway, and extracting said device type identifier of said control gateway; and
an installer unit (420c), for downloading and activating said corresponding control gateway base driver to said open platform according to said device type identifier.

5. The system as claimed in claim 2, wherein said instruction management module (410) further includes:
a processor unit (410a), for receiving and converting signal formats transmitted by said control gateway to indirectly achieve device discovery, also receiving instruction from said protocol proxy (430), converting said instruction into an instruction acceptable to said control gateway, and transmitting said converted instruction to said control gateway in a communication protocol suitable for said control gateway to control said one or more devices; and
a generator unit (410b), for generating device protocols corresponding to said one or more devices on said open platform according to said device description and said device protocol description provided by said control gateway, and registering said device protocols to said open platform.

6. The system as claimed in claim 2, wherein said control gateway base driver is realized by said instruction module (410) and said protocol proxy (430).

7. A method for controlling devices (104; 404) connected to a control gateway (103; 403), applicable to a communication system between an open platform (105; 405) and the device connected to a control gateway, said devices operating in a first device protocol, said method comprising the steps of:
said open platform (105; 405) inquiring said control gateway (103; 403), and requesting a device type identifier;
said open platform receiving said device type identifier from said control gateway, and downloading and activating a control gateway base driver (108j; 408j) corresponding to said control gateway;
said control gateway base driver inquiring said control gateway for a device identifier of said device, and said control gateway returning said device identifier of said device to said open platform;
said control gateway base driver receiving said device identifier returned by said control gateway, automatically generating a device protocol of a second form corresponding to said device, and registering to said open platform; and
when a control device using said second form device protocol on said open platform, said control device using an original instruction to use or control said device protocol, a converted instruction able to communicate with said control gateway is transmitted by said control gateway base driver to said control gateway, and said control gateway uses said converted instruction to control said device.

8. The method as claimed in claim 7, wherein said device identifier further includes a unit identification of each said device, a device description, and a device protocol description.

9. The method as claimed in claim 7, wherein said device protocol description is distinguished by a group so that said device protocol description of said device is unique.

10. The method as claimed in claim 7, wherein said control device includes other bundles on said open platform or an external control device.

11. The method as claimed in claim 9, wherein said group distinguishing method is based on one of the three ways, the functions of said device, the parameters required, and combination of the above two.

12. The method as claimed in claim 7, wherein said control gateway base driver (108; 408) generates said second device protocol corresponding to said device according to said device identifier, and registers to said open platform (105; 405).

13. The method as claimed in claim 7, wherein the operation of said control gateway base driver (108; 408) further includes the steps of:
having a device protocol content defined by said second device protocol, and responsible for conversion between said first device protocol and said second device protocol;
generating a device protocol content corresponding to said device (101; 401), and registering said device protocol content conforming to said second device protocol to said open platform (105; 405); and
converting an original instruction using said second device protocol through said control gateway (103; 403) into an instruction able to communicate with said control gateway, and transmitting said instruction through a communication protocol to said control gateway for controlling said one or more devices (101; 401).

14. The method as claimed in claim 7, wherein said open platform (405) provides a control gateway wire administration module (420) for communicating with said control gateway (403), when said control gateway is connected to said open platform, said control gateway wire administration module detects the presence of said control gateway, listens and extracts said device type identifier of said control gateway, downloads said corresponding control gateway base driver (408j), and activates said corresponding said control gateway base driver.

15. The method as claimed in claim 7, wherein said open platform (405) downloads said corresponding control gateway base driver from a server (407).

## Patentansprüche

1. System (100; 400) zum Steuern von Geräten (104, 401), die mit einem Steuerungs-Gateway (103; 403) verbunden sind, wobei das genannte System Folgendes umfasst:
wenigstens ein Gerät (101; 410), wobei jedes Gerät eine Gerätekennung hat und jedes Gerät in einem ersten Geräte-Protokoll betrieben wird;
einen Steuerungs-Gateway (103; 403), der elektrisch mit dem genannten wenistens einen Gerät gekoppelt ist und eine entsprechende Gerätetypkennung hat;
**dadurch gekennzeichnet, dass** das System ferner Folgendes umfasst:
einen Server (107; 407) zum Bereitstellen mehrerer Steuerungs-Gateway-Basistreiber (108; 408) und
eine elektrisch mit dem genannten Steuerungs-Gateway gekoppelte, offene Plattform (105; 405) zum automatischen Herunterladen eines entsprechenden Steuerungs-Gateway-Basistreibers (108; 408) von dem genannten Server gemäß der genannten Gerätetypkennung, die außerdem einen Mechanismus mit der Fähigkeit zur automatischen Konvertierung und Erzeugung eines den genannten Geräten entsprechenden zweiten GeräteProtokolls gemäß der genannten Gerätekennung hat, und wobei das genannte Geräte-Protokoll mit dem genannten Steuerungs-Gateway zum Steuern der genannten Geräte kommunizieren kann.

2. System nach Anspruch 1, bei dem die genannte offene Plattform ferner Folgendes aufweist:
ein Steuerungs-Gateway-Kabelverwaltungsmodul (420) zum Erkennen der Anwesenheit des genannten Steuerungs-Gateways (403), Herunterladen des entsprechenden Steuerungs-Gateway-Basistreibers (408) und Aktivieren des genannten Steuerung-Gateway-Basistreibers;
einen Protokoll-Proxy (430) mit einem formabhängigen Geräteprotokollinhalt, der für das Konvertieren in das genannte andere Geräteprotokoll zuständig ist, und
ein Anweisungsmanagementmodul (410) zum Erzeugen von den genannten Geräten entsprechendem Geräteprotokollinhalt auf der genannten offenen Plattform, Registrieren des genannten Geräteprotokollinhalts auf der genannten offenen Plattform und Konvertieren in eine Anweisung, die zur Kommunikation mit dem genannten Steuerungs-Gateway fähig ist, und Verwenden eines Kommunikationsprotokolls zum Übertragen an den genannten Steuerungs-Gateway zum Steuern der genannten Geräte (401).

3. System nach Anspruch 1, bei dem die genannte Gerätekennung ferner eine Einheitsidentifikation von jedem genannten Gerät, eine Gerätebeschreibung und eine Geräteprotokollbeschreibung aufweist.

4. System nach Anspruch 2, bei dem das genannte Steuerungs-Gateway-Kabelverwaltungsmodul (420) ferner Folgendes aufweist:
eine Schnittstellenabhöreinheit (420a) zum Abhören aller Schnittstellen an der genannten offenen Plattform, um zu erkennen, ob ein Steuerungs-Gateway mit der genannten offenen Plattform verbunden ist;
eine Extrahiereinheit (420b) zum Kommunizieren mit dem genannten Steuerung-Gateway und zum Extrahieren der genannten Gerätetypkennung des genannten Steuerungs-Gateways und
eine Installer-Einheit (420c) zum Herunterladen und Aktivieren des genannten entsprechenden Steuerungs-Gateway-Basistreibers zu bzw. auf der genannten offenen Plattform gemäß der genannten Gerätetypkennung.

5. System nach Anspruch 2, bei dem das genannte Anweisungsmanagementmodul (410) ferner Folgendes aufweist:
eine Prozessoreinheit (410a) zum Empfangen und Konvertieren von Signalformaten, die von dem genannten Steuerungs-Gateway übertragen werden, um indirekt die Geräteentdeckung zu erreichen, sowie zum Empfangen einer Anweisung von dem genannten Protokoll-Proxy (430), Konvertieren der genannten Anweisung in eine für den genannten Steuerungs-Gateway annehmbare Anweisung und Übertragen der genannten konvertierten Anweisung an den genannten Steuerungs-Gateway in einem Kommunikationsprotokoll, das für den genannten Steuerungs-Gateway geeignet ist, um das genannte wenigstens eine Gerät zu steuern; und
eine Generatoreinheit (410b) zum Erzeugen von dem genannten wenigstens einen Gerät auf der genannten offenen Plattform entsprechenden Geräteprotokollen gemäß der genannten Gerätebeschreibung und der genannten Geräteprotokollbeschreibung, die von dem genannten Steuerungs-Gateway bereitgestellt wird, und Registrieren der genannten Geräteprotokolle auf der genannten offenen Plattform.

6. System nach Anspruch 2, bei dem der genannte Steuerungs-Gateway-Basistreiber von dem genannten Anweisungsmodul (410) und dem genannten Protokoll-Proxy (430) realisiert wird.

7. Verfahren zum Steuern von mit einem Steuerungs-Gateway (103; 403) verbundenen Geräten (104; 404), anwendbar auf ein Kommunikationssystem zwischen einer offenen Plattform (105; 405) und dem mit einem Steuerungs-Gateway verbundenen Gerät, wobei die genannten Geräte in einem ersten Geräteprotokoll betrieben werden, wobei das genannte Verfahren die folgenden Schritte umfasst:
Abfragen des genannten Steuerungs-Gateways (103; 403) durch die genannte offene Plattform (105; 405) und Anfordern einer Gerätetypkennung;
Erhalten der genannten Gerätetypkennung durch die genannte offene Plattform von dem genannten Steuerungs-Gateway und Herunterladen und Aktivieren eines dem genannten Steuerungs-Gateway entsprechenden Steuerungs-Gateway-Basistreibers (108j; 408j);
Abfragen des genannten Steuerungs-Gateways durch den genannten Steuerungs-Gateway-Basistreiber nach einer Gerätekennung des genannten Geräts und Zurücksenden der genannten Gerätekennung des genannten Geräts von dem genannten Steuerungs-Gateway an die genannte offene Plattform;
Erhalten der von dem genannten Steuerungs-Gateway zurückgesendeten, genannten Gerätekennung durch den genannten Steuerungs-Gateway-Basistreiber, automatisches Erzeugen eines Geräteprotokolls mit einer dem genannten Gerät entsprechenden zweiten Form und Registrieren auf der genannten offenen Plattform und
wenn ein Steuerungsgerät das genannte Geräteprotokoll der zweiten Form an der genannten offenen Plattform verwendet, wobei das genannte Steuerungsgerät eine ursprüngliche Anweisung zum Verwenden oder Steuern des genannten Geräteprotokolls verwendet, wird eine konvertierte Anweisung, die zur Kommunikation mit dem genannten Steuerungs-Gateway fähig ist, von dem genannten Steuerungs-Gateway-Basistreiber an den genannten Steuerungs-Gateway übertragen und der genannte Steuerungs-Gateway verwendet die genannte konvertierte Anweisung zum Steuern des genannten Geräts.

8. Verfahren nach Anspruch 7, bei dem die genannte Gerätekennung ferner eine Einheitsidentifikation von jedem genannten Gerät, eine Gerätebeschreibung und eine Geräteprotokollbeschreibung aufweist.

9. Verfahren nach Anspruch 7, bei dem die genannte Geräteprotokollbeschreibung nach Gruppe unterschieden wird, so dass die genannte Geräteteprotokollbeschreibung des genannten Geräts eindeutig ist.

10. Verfahren nach Anspruch 7, bei dem das genannte Steuerungsgerät andere Bündel auf der genannten offenen Plattform oder ein externes Steuergerät aufweist.

11. Verfahren nach Anspruch 9, bei dem das genannte Gruppenunterscheidungsverfahren auf einer der drei Arten, den Funktionen des genannten Geräts, den erforderlichen Parametern und einer Kombination aus den obigen beiden, basiert.

12. Verfahren nach Anspruch 7, bei dem der genannte Steuerungs-Gateway-Basistreiber (108; 408) das dem genannten Gerät entsprechende genannte zweite Geräteprotokoll gemäß der genannten Gerätekennung erzeugt und auf der genannten offenen Plattform (105; 405) registriert.

13. Verfahren nach Anspruch 7, bei dem der Betrieb des genannten Steuerungs-Gateway-Basistreibers (108; 408) ferner die folgenden Schritte umfasst:
Aufweisen eines Geräteprotokollinhalts, der von dem genannten zweiten Geräteprotokoll definiert wird und für die Konvertierung zwischen dem genannten ersten Geräteprotokoll und dem genannten zweiten Geräteprotokoll zuständig ist;
Generieren eines dem genannten Gerät (101; 401) entsprechenden Geräteprotokollinhalts und Registrieren des genannten, dem genannten zweiten Geräteprotokoll entsprechenden Geräteprotokollinhalts auf der genannten offenen Plattform (105; 405) und
Konvertieren einer urspünglichen Anweisung mithilfe des genannten zweiten Geräteprotokolls durch den genannten Steuerungs-Gateway (103; 403) in eine Abweisung, die mit dem genannten Steuerungs-Gateway kommunizieren kann, und Übertragen der genannten Anweisung durch ein Kommunikationsprotokoll an den genannten Steuerungs-Gateway zum Steuern des genannten wenigstens einen Geräts (101; 401).

14. Verfahren nach Anspruch 7, bei dem die genannte offenen Plattform (405) ein Steuerungs-Gateway-Kabelverwaltungsmodul (420) zum Kommunizieren mit dem genannten Steuerungs-Gateway (403) bereitstellt, wenn der genannte Steuerungs-Gateway mit der genannten offenen Plattform verbunden ist, das genannte Steuerungs-Gateway-Kabelverwaltungsmodul die Anwesenheit des genannten Steuerungs-Gateways erkennt, die genannte Gerätetypkennung des genannten Steuerungs-Gateways abhört und extrahiert, den entsprechenden Steuerungs-Gateway-Basistreiber (408)j herunterlädt und den entsprechenden genannten Steuerungs-Gateway-Basistreiber aktiviert.

15. Verfahren nach Anspruch 7, bei dem die genannte offene Plattform (405) den genannten entsprechenden Steuerungs-Gateway-Basistreiber von einem Server (407) herunterlädt.

## Revendications

1. Système (100 ; 400) destiné à commander des dispositifs (104 ; 401) connectés à une passerelle de commande (103 ; 403), ledit système comportant :
un ou plusieurs dispositifs (101 ; 410), chaque dit dispositif ayant un identificateur de dispositif et chaque dispositif fonctionnant selon un premier protocole de dispositif ;
une passerelle de commande (103 ; 403), électriquement couplée auxdits un ou plusieurs dispositifs, et ayant un identificateur de type de dispositif correspondant ; **caractérisé en ce que** le système comporte par ailleurs :
un serveur (107 ; 407) destiné à fournir une pluralité de pilotes de base pour passerelle de commande (108 ; 408) ; et
une plateforme ouverte (105 ; 405), électriquement couplée à ladite passerelle de commande, destinée à télécharger automatiquement un pilote de base pour passerelle de commande correspondant (108 ; 408) en provenance dudit serveur en fonction dudit identificateur de type de dispositif, ayant également un mécanisme en mesure de convertir et de générer automatiquement un deuxième protocole de dispositif correspondant auxdits dispositifs en fonction dudit identificateur de dispositif, et
ledit protocole de dispositif étant en mesure de communiquer avec ladite passerelle de commande pour commander lesdits dispositifs.

2. Système selon la revendication 1, dans lequel ladite plateforme ouverte comprend par ailleurs :
un module de gestion par câble de passerelle de commande (420), destiné à détecter la présence de ladite passerelle de commande (403), à télécharger le pilote de base pour passerelle de commande correspondant (408), et à activer ledit pilote de base pour passerelle de commande ;
un mandataire de protocole (430), ayant un contenu de protocole de dispositif en fonction du type, ayant pour responsabilité de convertir en ledit un autre protocole de dispositif et
un module de gestion des instructions (410), destiné à générer un contenu de protocole de dispositif correspondant auxdits dispositifs sur ladite plateforme ouverte, à enregistrer ledit contenu de protocole de dispositif sur ladite plateforme ouverte, et à convertir en une instruction en mesure de communiquer avec ladite passerelle de commande, et à utiliser un protocole de communication à des fins de transmission à ladite passerelle de commande pour commander lesdits dispositifs (401).

3. Système selon la revendication 1, dans lequel ledit identificateur de dispositif comprend par ailleurs une identification d'unité de chaque dit dispositif, une description de dispositif, et une description de protocole de dispositif.

4. Système selon la revendication 2, dans lequel ledit module de gestion par câble de passerelle de commande (420) comprend par ailleurs :
une unité d'écoute d'interface (420a), destinée à écouter toutes les interfaces sur ladite plateforme ouverte pour détecter la connexion d'une passerelle de commande à ladite plateforme ouverte ;
une unité d'extraction (420b), destinée à communiquer avec ladite passerelle de commande, et à extraire ledit identificateur de type de dispositif de ladite passerelle de commande ; et
une unité d'installation (420c), destinée à télécharger et à activer ledit pilote de base pour passerelle de commande correspondant sur ladite plateforme ouverte en fonction dudit identificateur de type de dispositif.

5. Système selon la revendication 2, dans lequel ledit module de gestion des instructions (410) comprend par ailleurs :
une unité de traitement (410a), destinée à recevoir et à convertir des formats de signaux transmis par ladite passerelle de commande pour réaliser indirectement la découverte de dispositifs, à recevoir également une instruction en provenance dudit mandataire de protocole (430), à convertir ladite instruction en une instruction acceptable pour ladite passerelle de commande, et à transmettre ladite instruction convertie à ladite passerelle de commande selon un protocole de communication convenant à ladite passerelle de commande pour commander lesdits un ou plusieurs dispositifs ; et
une unité du génération (410b), destinée à générer des protocoles de dispositifs correspondants auxdits un ou plusieurs dispositifs sur ladite plateforme ouverte en fonction de ladite description de dispositif et de ladite description de protocole de dispositif fournies par ladite passerelle de commande, et à enregistrer lesdits protocoles de dispositifs sur ladite plateforme ouverte.

6. Système selon la revendication 2, dans lequel ledit pilote de base pour passerelle de commande est réalisé par ledit module des instructions (410) et par ledit mandataire de protocole (430).

7. Procédé destiné à commander des dispositifs (104 ; 404) connectées à une passerelle de commande (103 ; 403), applicable à un système de communication entre une plateforme ouverte (105 ; 405) et le dispositif connecté à une passerelle de commande, lesdits dispositifs fonctionnant selon un premier protocole de dispositif, ledit procédé comportant les étapes suivantes :
ladite plateforme ouverte (105 ; 405) interrogeant ladite passerelle de commande (103 ; 403), et demandant un identificateur de type de dispositif;
ladite plateforme ouverte recevant ledit identificateur de type de dispositif en provenance de ladite passerelle de commande, et téléchargeant et activant un pilote de base pour passerelle de commande (108j ; 408j) correspondant à ladite passerelle de commande ;
ledit pilote de base pour passerelle de commande interrogeant ladite passerelle de commande à la recherche d'un identificateur de dispositif dudit dispositif, et ladite passerelle de commande renvoyant ledit identificateur de dispositif dudit dispositif à ladite plateforme ouverte ;
ledit pilote de base pour passerelle de commande recevant ledit identificateur de dispositif renvoyé par ladite passerelle de commande, générant automatiquement un protocole de dispositif d'un deuxième type correspondant audit dispositif, et enregistrant sur ladite plateforme ouverte ; et
quand un dispositif de commande utilisant ledit protocole de dispositif de deuxième type sur ladite plateforme ouverte, ledit dispositif de commande utilisant une instruction d'origine pour utiliser ou commander ledit protocole de dispositif, une instruction convertie en meure de communiquer avec ladite passerelle de commande est transmise par ledit pilote de base pour passerelle de commande à ladite passerelle de commande, et ladite passerelle de commande utilise ladite instruction convertie pour commander ledit dispositif.

8. Procédé selon la revendication 7, dans lequel ledit identificateur de dispositif comprend par ailleurs une identification d'unité de chaque dit dispositif, une description de dispositif, et une description de protocole de dispositif

9. Procédé selon la revendication 7, dans lequel ladite description de protocole de dispositif se distingue par un groupe de telle manière que ladite description de protocole de dispositif dudit dispositif est unique.

10. Procédé selon la revendication 7, dans lequel ledit dispositif de commande comprend d'autres paquets sur ladite plateforme ouverte ou sur un dispositif de commande externe.

11. Procédé selon la revendication 9, dans lequel ledit procédé de distinction de groupes est basé sur l'une des trois façons, les fonctions dudit dispositif, les paramètres requis, et la combinaison des deux ci-dessus.

12. Procédé selon la revendication 7, dans lequel ledit pilote de base pour passerelle de commande (108 ; 408) génère ledit deuxième protocole de dispositif correspondant audit dispositif en fonction dudit identificateur de dispositifs, et enregistre sur ladite plateforme ouverte (105 ; 405).

13. Procédé selon la revendication 7, dans lequel le fonctionnement dudit pilote de base pour passerelle de commande (108 ; 408) comprend par ailleurs les étapes consistant à :
avoir un contenu de protocole de dispositif défini par ledit deuxième protocole; de dispositif, et avoir pour responsabilité la conversion entre ledit premier protocole de dispositif et ledit deuxième protocole de dispositif;
générer un contenu de protocole de dispositif correspondant audit dispositif (101 ; 401), et enregistrer ledit contenu de protocole de dispositif selon ledit deuxième protocole de dispositif sur ladite plateforme ouverte (105 ; 405) ; et
convertir une instruction d'origine en utilisant ledit deuxième protocole de dispositif par le biais de ladite passerelle de commande (103, 403) en une instruction en mesure de communiquer avec ladite passerelle de commande, et transmettre ladite instruction par le biais d'un protocole de communication à ladite passerelle de commande pour commander lesdits un ou plusieurs dispositifs (101 ; 401).

14. Procédé selon la revendication 7, dans lequel ladite plateforme ouverte (405) met en oeuvre un module de gestion par câble de passerelle de commande (420) destiné à communiquer avec ladite passerelle de commande (403), quand ladite passerelle de commande est connectée ladite plateforme ouverte, ledit module de gestion par câble de passerelle de commande détecte la présence de ladite passerelle de commande, écoute et extrait ledit identificateur de type de dispositif de ladite passerelle de commande, télécharge ledit pilote de base pour passerelle de commande correspondant (408j), et active ledit pilote de base pour passerelle de commande correspondant.

15. Procédé selon la revendication 7, dans lequel ladite plateforme ouverte (405) télécharge ledit pilote de base pour passerelle de commande correspondant en provenance d'un serveur (407).
